(19) Europäisches Patentamt / European Patent Office / Office européen des brevets

(11) **EP 2 202 987 B1**

(12) # EUROPEAN PATENT SPECIFICATION

(45) Date of publication and mention of the grant of the patent:
**21.03.2012 Bulletin 2012/12**

(21) Application number: **10003368.7**

(22) Date of filing: **07.01.2003**

(51) Int Cl.:
***H04N 7/26*** *(2006.01)* ***H04N 7/36*** *(2006.01)*
***H04N 7/46*** *(2006.01)* ***H04N 7/50*** *(2006.01)*
***H04N 5/14*** *(2006.01)*

(54) **Method of determining motion vectors of direct mode in a B picture**

Verfahren zur Bestimmung von Direkt-Mode-Bewegungsvektoren in einem B-Bild

Méthode pour le calcul des vecteurs de mouvement a mode direct pour image de type B

(84) Designated Contracting States:
**ES FR HU IT**

(30) Priority: **03.05.2002 KR 20020024470**

(43) Date of publication of application:
**30.06.2010 Bulletin 2010/26**

(62) Document number(s) of the earlier application(s) in accordance with Art. 76 EPC:
**05021832.0 / 1 635 577**
**03000208.3 / 1 359 767**

(73) Proprietor: **LG Electronics Inc.**
**Seoul 150-010 (KR)**

(72) Inventor: **Jeong, Syeong Moon**
**Yeongdeungpo-gu**
**Seoul 150-010 (KR)**

(74) Representative: **Diehl & Partner GbR**
**Patentanwälte**
**Augustenstrasse 46**
**80333 München (DE)**

(56) References cited:
**EP-A- 0 863 674** **EP-A- 0 898 427**
**EP-A- 1 148 732**

- **WORKING DRAFT NUMBER 2, REVISION 2 (WD-2) JOINT VIDEO TEAM (JVT) OF ISO/IEC MPEG (MPEG-4 PART 10 AVC) AND ITU-T VCEG (H.26L), GENEVA, JANUARY 29 - FEBRUARY 1, STATUS: APPROVED OUTPUT DOCUMENT JVT-B118R2, [Online] 15 March 2002 (2002-03-15), pages 1-106, XP002245569, Retrieved from the Internet: URL: ftp://standards.pictel.com/video-site/ 0201_GEN> [retrieved on 2003-06-22]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 202 987 B1

Printed by Jouve, 75001 PARIS (FR)

## Description

## BACKGROUND OF THE INVENTION

### Field of the Invention

The present invention relates to a moving picture coding system, and more particularly, to a moving picture coding system to enhance a coding efficiency.

### Description of the Related Art

It is desirable to detect a scene change in a sequence so as to compress and code a moving picture sequence optimally. This is because many video applications, such as in news, sports broadcasting, a close-up conversation like interview, and multipoint video conferencing, include repeating scene changes. Such a scene change can occur in an entire picture or in some area of the picture.

The digital image coding method may be changed whenever a scene change is detected. For example, since similarity is very low between a picture in which scene change occurs and a picture in a previous scene, a picture with scene change is coded by intra mode in which a picture is coded using prediction only from decoded samples within the same picture rather than by inter mode in which a picture is coded by motion compensation from previously-decoded reference pictures.

In more detail, a picture in which a scene change occurs in the entire picture, is an intra picture that is coded in intra mode on all blocks. Meanwhile, in case of a picture in which a scene change occurs at some area, all blocks within the areas in which scene changes occur are coded in intra mode. Since such intra mode generates more bits compared with inter mode, a sequence in which scene changes occur very frequently has a fatal problem in a low bit rate application.

Generally, when using a B picture in a moving picture coding system, the coding order is different from the displaying order.

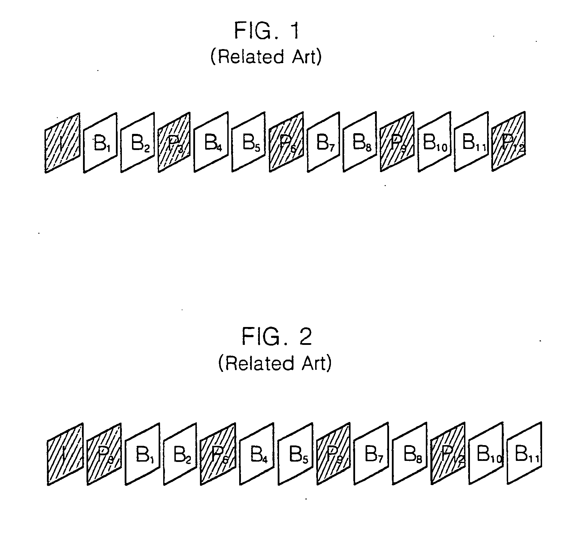

Fig. 1 illustrates a display order in which each picture is displayed when using two B pictures. As shown in Fig. 1, an intra picture I is displayed first among pictures to be displayed. Two B pictures B1 and B2 are displayed subsequently after the intra picture I. A P picture P3 is displayed after the B pictures are displayed. As described above, the next steps are performed. In other words, the fourth and fifth B pictures B4 and B5 are displayed after the P picture P3 is displayed. Subsequently, a P picture P6 is displayed.

However, the coding order of a digital image is not the same as the display order. In other words, the P picture is coded prior to the B picture.

Fig. 2 illustrates a coding order in which each picture is displayed when using two B pictures. As shown in Fig. 2, if an intra picture I is coded, the P picture P3 is coded prior to the two B pictures B1 and B2 that are displayed prior to the P picture P3. After that, P6, B4, B5, P9, B7, B8, P12, B10 and B11 are coded subsequently.

Here, the B pictures have five modes such as intra mode, forward mode, backward mode, bi-predictive mode and direct mode. The bi-predictive mode has two reference pictures. Two reference pictures are all located prior to or after the B picture or one of them is located prior to the B picture and the other is located after the B picture.

Especially, the direct mode utilizes temporal redundancy to maintain motion continuity between two adjacent pictures. In other words, in the direct mode, the forward motion vector and the backward motion vector of the direct mode in the B picture are derived from the motion vector of a co-located block in the subsequent picture locating just after the B picture. Such a direct mode does not need overhead bits such as motion information so that a bit rate can be reduced.

Here, the forward motion vector $MV_f$ and the backward motion vector $MV_b$ of the conventional direct mode are obtained by scaling the motion vector MV using time distance between pictures when the co-located block in a subsequent picture has a motion vector MV. In other words, the forward motion vector $MV_f$ and the backward motion vector $MV_b$ are determined using the following Equations 1 and 2.

Equation 1:

$$MVf = \frac{TRb * MV}{TRd}$$

Equation 2:

$$MVb = \frac{(TRb - TRd) * MV}{TRd}$$

where MV is the motion vector of the co-located block in the subsequent picture, $MV_f$ is the forward motion vector of the direct mode for a B picture, $MV_b$ is the backward motion vector of the direct mode for the B picture, TRd is a time distance between the subsequent picture and a reference picture pointed by the motion vector of the co-located block in the subsequent picture, and TRb is a time distance between a B picture and a reference picture pointed by the motion vector of the co-located block in the subsequent picture.

AS a result, the direct mode is a coding mode to obtain two motion-compensated blocks using two motion vectors $MV_f$ and $MV_b$ and obtains a prediction block by averaging or interpolative calculation of two motion-compensated blocks.

Document JVT-B118r2 with the title "Working Draft Number 2 Revision 2 of ITU-T Recommendation H.26L and MPEG-4/Part 10" of the Joint Video Team (JVT) of ISO/IEC MPEG and ITU-T VCEG discloses the features of the preamble of claim 1.

## SUMMARY OF THE INVENTION

The present invention is directed to a moving picture coding method that substantially obviates one or more problems due to limitations and disadvantages of the related art.

Accordingly, an object of the present invention is to provide a moving picture coding system capable of enhancing coding efficiency in direct mode.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

The above object is solved by the combination of features of independent claim 1. Subject matter nor falling within the scope of the independent claim shall not be considered as embodiment of the invention but represents background art.

A method of determining motion vectors of direct mode in a B picture includes the step of: when coding each block in the B picture using the direct mode, determining differently motion vectors of the direct mode for the B picture according to a kind of a reference buffer storing a reference picture pointed by a motion vector of a co-located block in a specified picture.

It is desired that the specified picture is one of short-term reference pictures used in coding the B picture.

The kind of the reference picture is determined using a reference picture index calculated previously at a co-located block in the specified picture.

The reference picture index is stored in a system buffer.

When a motion vector calculated at co-located block in the specified picture points to a long-term reference picture, a forward motion vector of the direct mode for the B picture is a motion vector of the co-located block in the specified picture, and a backward motion vector of the direct mode for the B picture is determined to be zero.

The motion vector calculated at the co-located block in the specified picture is stored in a system buffer.

When a motion vector calculated at co-located block in the specified picture points to a short-term reference picture, motion vectors of the direct mode for the B picture are determined by scaling the motion vector of the co-located block in the specified picture by time distance between pictures.

The motion vector calculated at the co-located block in the specified picture is stored in a system buffer.

A method of determining motion vectors of direct mode in a B picture comprises the step of: when coding each block in the B picture using the direct mode, determining differently motion vectors of the direct mode for the B picture according to a kind of a reference buffer storing a specified picture.

The reference buffer includes a long-term reference buffer and a short-term reference buffer.

It is desired that the specified picture is one of a short-term reference picture and a long-term reference picture.

When the specified picture is in the long-term reference buffer, a forward motion vector of the direct mode for the B picture is a motion vector of the co-located block in the specified picture, and a backward motion vector of the direct mode for the B picture is determined to be zero.

When the specified picture is in the short-term reference buffer, motion vectors of direct mode for the B picture are determined differently according to the kind of the reference buffer storing a reference picture pointed by the motion vector of the co-located block in the specified picture.

The kind of the reference picture is determined using a reference picture index calculated previously at the co-located block in the specified picture.

The reference picture index is stored in a system buffer.

When a motion vector calculated at the co-located block in the specified picture points to a long-term reference picture, a forward motion vector of the direct mode for the B picture is a motion vector of the co-located block in the specified picture, and a backward motion vector of the direct mode for the B picture is determined to be zero.

The motion vector calculated at the co-located block in the specified picture is stored in a system buffer.

When a motion vector calculated at co-located block in the specified picture points to a short-term reference picture, motion vectors of the direct mode for the B picture are determined by scaling the motion vector of the co-located block in the specified picture by time distance between pictures.

The motion vector calculated at the co-located block in the specified picture is stored in a system buffer.

A method of coding a P picture of a moving picture in inter mode comprises the steps of: (a) determining whether a scene change occurs in the P picture; and (b) if a scene change occurs in the P picture, coding the P picture with reference to the long-term reference picture.

It is desired that the P picture in which a scene change occurs is one of a scene cut picture and a partial scene change picture.

If the P picture in which a scene change occurs is a partial scene change picture, the blocks included in an area in which a scene change occurs are coded using a long-term reference picture.

A long-term reference buffer storing the long-term reference picture is a buffer to store a picture coded before a predetermined time.

If the P picture in which a scene change occurs is a partial scene change picture, the blocks included in an area in which a scene change does not occur are coded using a short-term reference picture.

A short-term reference buffer storing the short-term reference picture is a buffer to store a picture coded after a predetermined time.

A method of coding a moving picture sequence in a moving picture coding system comprises the steps of: (a) determining whether a scene change occurs in a P picture; (b) if there is a P picture in which a scene change occurs, coding the P picture in inter mode with reference to a long-term reference picture; (c) when coding each block in a B picture using direct mode according to coding order, determining a kind of a reference buffer storing a specified picture; and (d) calculating motion vectors of the direct mode for the B picture according to the kind of the reference buffer and coding the B picture in the direct mode.

The motion vector calculated at the co-located block in the specified picture is stored in a system buffer.

When the specified picture is in the long-term reference buffer in the step (d), a forward motion vector of the direct mode for the B picture is a motion vector of the co-located block in the specified picture, and a backward motion vector of the direct mode for the B picture is determined to be zero.

When the specified picture is in the short-term reference buffer in the step (d), motion vectors of direct mode for the B picture are determined differently according to the kind of the reference buffer storing a reference picture pointed by the motion vector of the co-located block in the specified picture.

The kind of the reference picture is determined using a reference picture index calculated previously at a co-located block in the specified picture.

The reference picture index is stored in a system buffer.

When a motion vector calculated at co-located block in the specified picture points to a long-term reference picture, a forward motion vector of the direct mode for the B picture is a motion vector of the co-located block in the specified picture, and a backward motion vector of the direct mode for the B picture is determined to be zero.

The motion vector calculated at the co-located block in the specified picture is stored in a system buffer.

When a motion vector calculated at co-located block in the specified picture points to a short-term reference picture, motion vectors of the direct mode for the B picture are determined by scaling the motion vector calculated at the co-located block in the specified picture by time distance between pictures.

The motion vector calculated at the co-located block in the specified picture is stored in a system buffer.

The P picture in which a scene change occurs is one of a scene cut picture and a partial scene change picture.

If the P picture in which a scene change occurs is a partial scene change picture, the blocks included in an area in which a scene change occurs are coded using a long-term reference picture.

A long-term reference buffer storing the long-term reference picture is a buffer to store a picture coded before a predetermined time.

If the P picture in which a scene change occurs is a partial scene change picture, the blocks included in an area in which a scene change does not occur are coded using a short-term reference picture.

A short-term reference buffer storing the short-term reference picture is a buffer to store a picture coded after a predetermined time.
A short-term reference buffer consists of a first input first output (FIFO).
The specified picture for direct mode coding in the B picture is one of reference pictures used in coding the B picture.
It is to be understood that both the foregoing general description and the following detailed description of the present invention are exemplary and explanatory and are intended to provide further explanation of the invention as claimed.

## BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
Fig. 1 illustrates a display order in which each picture is displayed when using two B pictures;
Fig. 2 illustrates a coding order in which each picture is displayed when using two B pictures;
Figs. 3A to 3B flowcharts illustrating a method of coding a moving picture sequence in a moving picture coding system according to background art;
Fig. 4 illustrates a method of coding a moving picture sequence in which a scene change occurs according to background art; and
Fig. 5 illustrates a method of coding a B picture in direct mode according to background art.

## DETAILED DESCRIPTION OF THE INVENTION

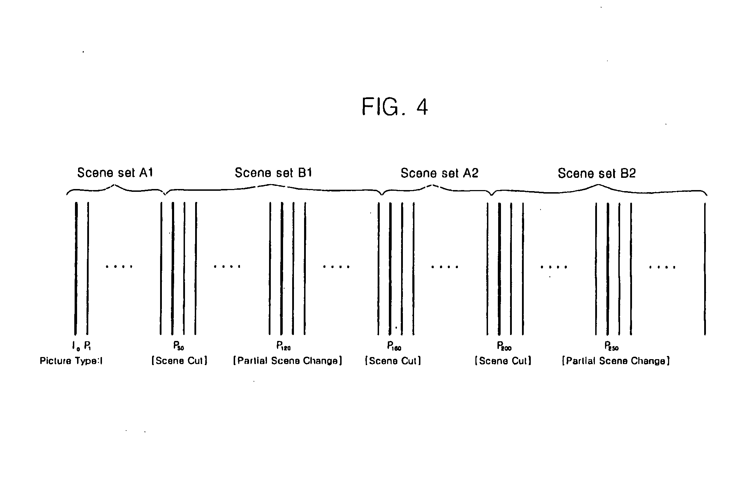

Reference will now be made in detail to the preferred embodiments of the present invention, examples of which are illustrated in the accompanying drawings. Wherever possible, the same reference numbers will be used throughout the drawings to refer to the same or like parts.
To begin with, before an embodiment of the present invention is described, in moving pictures having a scene change, a picture in which a scene change occurs entirely in the picture is defined as a scene cut picture and a picture in which a scene change occurs partially in the picture is defined as a partial scene change picture.

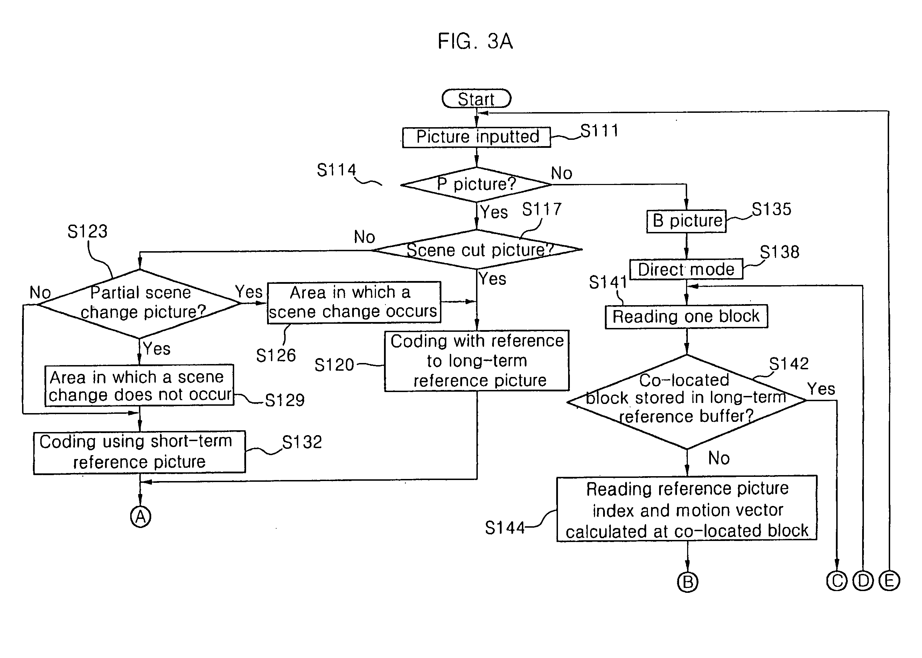

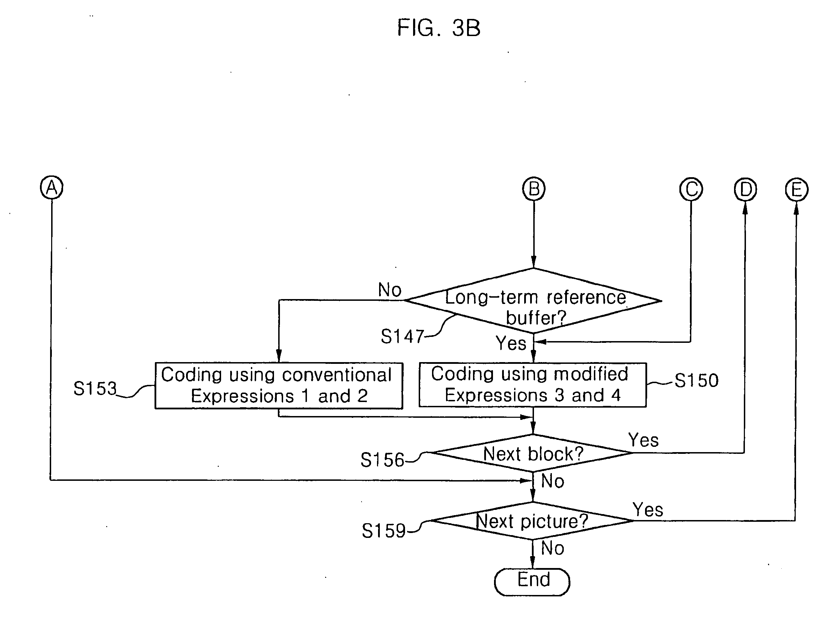

Figs. 3A and 3B are flowcharts illustrating a method of coding a moving picture sequence in a moving picture coding system according to background art. Referring to Figs. 3A and 3B, pictures are sequentially inputted from a moving picture sequence (S111).
Kinds of pictures are determined (S114). In other words, it is determined whether the inputted picture is a P picture or a B picture. Here, in this embodiment of the present invention, it is assumed that a coding with respect to an intra picture is completed in advance.
If a picture is the P picture, it is determined whether or not a scene change occurs in the P picture (S117). Here, the scene change is determined by comparing the P picture with a picture (P picture or B picture) displayed just before the P picture.
As a result of the determination in the step S117, if the scene is changed entirely among the P pictures, the P picture is a scene cut picture. Meanwhile, if the P picture is determined as the scene cut picture, a coding is carried out with reference to a long-term reference picture (S120).
If the P picture is not the scene cut picture, it is determined whether or not the P picture is a partial scene change picture (S123).
If the P picture is the partial scene change picture, blocks contained in an area in which the scene is changed are coded with reference to the long-term reference picture returning to the step S120 (S126).
Blocks contained in an area in which the scene is not changed are coded with reference to a short-term reference picture (S129, S132).
Here, the long-term reference picture is a picture stored in a long-term reference buffer, and the short-term reference picture is a picture stored in a short-term reference buffer.
The short-term reference buffer is provided with a first input first output (FIFO) in which a picture first inputted is outputted first, and the pictures coded before relatively short time are stored in the short-term reference buffer.
The pictures coded before relatively long time are stored in the long-term reference buffer. First pictures of respective scene sets, i.e., an intra picture, the scene cut picture, the partial scene change picture and the like are stored in the long-term reference buffer.
If there is not the scene cut picture or the partial scene change picture in the long-term reference buffer, the picture in which the scene change occurs can be stored additionally.
Accordingly, as shown in Fig. 4, an intra picture 10 that is first scene cut picture of a scene set A1, a first scene cut picture P50 of a scene set B1 and a first partial scene change picture P120 can be stored in the long-term reference buffer. Here, scene set is a set of similar pictures. For example, suppose a discussion program that an announcer appears, a panel A appears, the announcer appears again and the panel A appears again. The scene that the announcer appears first is scene set A, and the scene that the panel A appears subsequently is scene set B. The scene that the announcer appears again is scene set A, and the scene that the panel A appears again is scene set B. As described above, when a scene change occurs, the P picture is coded by inter mode to code with reference to a short-term reference or a long-term reference picture instead intra mode. This reduces the amount of the bits to enhance coding efficiency.

Description of the step S117 to S132 will be made with Fig. 4. As shown in Fig. 4, if the P picture P200 to be coded now is the scene cut picture belonging to the scene set B2, the short-term reference pictures stored in the short-term reference buffer are not used. It is because the scene cut picture P200 is the first picture of the scene set B2, and the scene set of the scene cut picture P200 is different from the short-term reference pictures such as P199, P198, P197, etc belonging to the scene set A2. So the similarity of the scene cut picture P200 and the short-term reference pictures belonging to the scene set A2 is greatly reduced and the precise coding cannot be achieved from such reference pictures.

In this case, the P picture is coded in inter mode with reference to the other reference pictures P50 and P120 belonging to a scene set B1 that is same as a scene set B2.

On the other hand, if the partial scene change occurs in the P picture P250, the coding is performed differently depending on two conditions. In other words, the blocks included in the area which a partial scene change occurs is coded in inter mode with reference to the long-term reference pictures P50 and P120 stored in the long-term reference buffer. The blocks included in the area which a partial scene change does not occur is coded in inter mode with reference to the short-term reference pictures P249, P248, P247, etc stored in the short-term reference buffer.

As described above, after one P picture is coded, the next picture is inputted (S159). If the corresponding picture is a B picture, the five prediction modes (intra mode, forward mode, backward mode, bi-predictive mode and direct mode) are tested and one of them is selected as an optimal coding mode (S135, S138). In this specification, direct mode will be described mainly.

First, one block of the B picture is read (S141). Of course, the other blocks can be read subsequently. After then, a kind of a reference buffer storing a specified picture is examined

The specified picture is determined of the earlier pictures than the B picture in the coding order regardless of the display order. In other words, the specified picture is one of the reference pictures used to code the B picture. Therefore, the specified picture can be a short-term reference picture or a long-term reference picture. The short-term reference pictures may be before or after the B picture in display order and they are stored in the short-term reference buffer. The long-term reference pictures are stored in the long-term reference buffer. If the specified picture is a long-term reference picture, the forward motion vector of direct mode for the B picture is a motion vector of the co-located block in the specified picture. The backward motion vector of direct mode for the B picture is determined to be zero (S150). However, if the specified picture is a short-term reference picture, the reference picture index and the motion vector calculated at the co-located block in the specified picture are read (S144). These reference picture index and the motion vector is calculated previously and stored in the system buffer. According to reference picture index, it is determined whether the motion vector of the co-located block in the specified picture points to a long-term reference picture (S147). As described above, the reference pictures are stored in the reference buffer which includes the short-term reference buffer and the long-term reference buffer.

If the motion vector of the co-located block in the specified picture points to the long-term reference picture, the B picture is coded using the following expressions 3 and 4 (S150).

Expression 3

$$MVf = MV$$

where MV is a motion vector of the co-located block in the specified picture, and MVf is a forward motion vector of direct mode for the B picture

Expression 4

$$MVb = 0$$

where MV is a motion vector of the co-located block in the specified picture, and MVb is a backward motion vector of direct mode for the B picture

In other words, if the motion vector of the co-located block in the specified picture points to the long-term reference picture, the forward motion vector of direct mode for the B picture is the motion vector of the co- located block in the specified picture and the backward motion vector is zero.

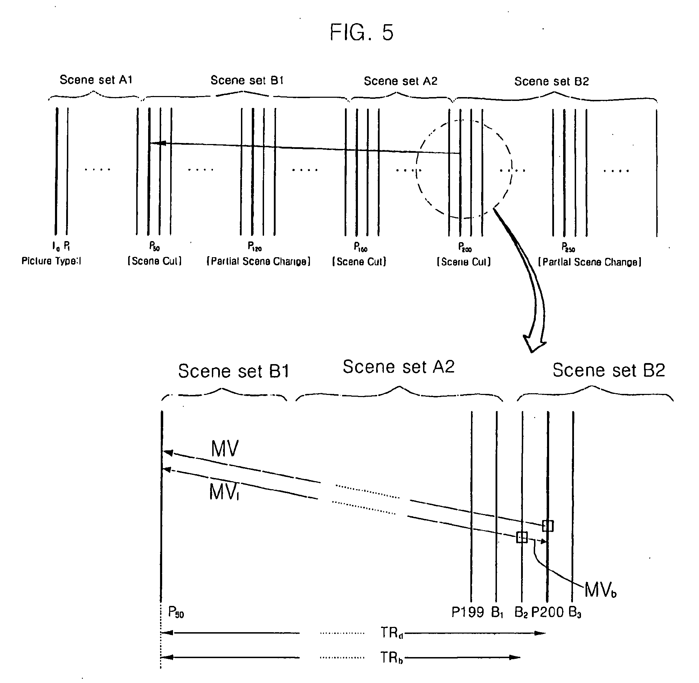

As shown in Fig. 5, in the step S150 of Figure 3B, if the motion vector of the co-located block in the specified picture P200 points to the long-term reference picture P50, TRd and TRb is meaningless in the conventional expressions 1 and 2. In other words, since TRd and TRb is the time distance including even the other scene set A2 between the specified picture P200 belonging to the scene set B2 and the long-term reference picture P50 belonging to the same scene set B1, the forward motion vector and the backward motion vector of direct mode cannot be calculated using such TRd and TRb.

Referring to Fig. 5, more detailed description is made. When inserting two B pictures into a moving picture sequence and coding them, the P picture P200 that is earlier than the B1 and B2 pictures in coding order is coded at first. Here since the P picture P200 is a scene cut picture in which a scene change occurs, the P picture P200 is coded in inter mode from the long-term reference picture P50 stored in the long-term reference buffer. According to the coding order, the next picture to be coded is a B1 picture. Since the B1 picture belongs to a scene set A2, the most blocks are coded in forward mode from the short-term reference pictures belonging to the scene set A2 or in bi-predictive mode in which all of two reference pictures belong to the scene set A2. However, intra mode, backward mode or bi-predictive mode from the P picture P200 belonging to the other scene set B2, and direct mode to obtain motion vectors of the direct mode from the co-located block in the P picture P200 are probably not used as the coding mode for the blocks in the B1 picture.

Differently, since not only the B2 picture but also the specified picture P200 used for motion vectors of direct mode for the B2 picture belong to the same scene set B2, the direct mode is selected as a coding mode for the most blocks in the B2 picture. In other words, after obtaining motion vector of each block in the specified picture P200 by inter mode from the long-term reference picture P50 belonging to the same scene set B2, the motion vectors of direct mode in the B2 picture are calculated from the motion vector of the co-located block in the specified picture P200. Since the B2 picture and the specified picture P200 belong to the scene set B2, the long-term reference picture P50 also belongs to the scene set B1, and the similarity between the scene set B1 and the scene set B2 is very high, the direct mode can be selected as a coding mode for the most blocks in the B2 picture. Accordingly, the coding efficiency for the B2 picture is improved.

On the other hand, if the motion vector of the co-located block in the specified picture points to a short-term reference picture, the B picture is coded using the conventional Expressions 1 and 2. In this time, since the short-term reference picture stored in the short-term reference buffer belongs to the same scene set as the B picture belongs to and other scene set does not exist between the specified picture and the short-term reference picture, the forward motion vector and the backward motion vector of direct mode are determined using the conventional Expressions 1 and 2 related to TRd and TRb representing time distance.

If one block of B picture is coded, the next block in the B picture is read and coded subsequently (S156). Such processes are performed on all blocks in the B picture. After the B picture is coded, the next picture is inputted and coded so that a moving picture coding is achieved (S159).

As described above, according to a moving picture coding system of the present invention, the forward motion vector and the backward motion vector of direct mode for the B picture are determined differently based on the reference picture pointed by the motion vector of the co-located block in the specified picture. When coding the B picture, direct mode is mainly used as coding mode to enhance the entire coding efficiency.

It will be apparent to those skilled in the art that various modifications and variations can be made in the present invention. Thus, it is intended that the present invention covers the modifications and variations of this invention provided they come within the scope of the appended claims.

In short, the invention relates to a moving picture coding system to enhance a coding efficiency for a moving picture coding sequence by inter mode and direct mode in a B picture. The motion vectors of direct mode are calculated and coded according to the kind of the reference picture pointed by a motion vector of a co-located block in the specified picture.

## Claims

1. A video coding system for deriving motion vectors for a bi-predictive block in direct mode comprising a long-term reference buffer for storing long-term reference pictures and a short-term reference buffer for storing short-term reference pictures, the system being adapted for:

   obtaining a reference index information associated with a reference picture of the bi-predictive block;
   obtaining a reference picture by using the reference index information;
   determining motion vectors of the bi-predictive block; and
   decoding the bi-predictive block based on the determined motion vectors;
   **characterised in that**
   in determining motion vectors of the bi-predictive block a forward motion vector of the bi-predictive block is set equal to a motion vector of the co-located block in a reference picture, if the reference picture is a long-term reference picture stored in the long-term reference buffer,
   in determining motion vectors of the bi-predictive block a forward motion vector of the bi-predictive block is defined by scaling a motion vector of the co-located block in a reference picture with a temporal distance between a current picture and the reference picture if the reference picture is a short-term reference picture stored in the short-term reference buffer,
   in determining motion vectors of the bi-predictive block a backward motion vector of the bi-predictive block is set equal to zero if the reference picture is a long-term reference picture stored in the long-term reference buffer; and
   in determining motion vectors of the bi-predictive block a backward motion vector of the bi-predictive block is set by scaling a motion vector of the co-located block in a reference picture with a temporal distance between a current picture and the reference picture if the reference picture is a short-term reference picture stored in the short-term reference buffer.

## Patentansprüche

1. Videocodiersystem zum Ableiten von Bewegungsvektoren für einen bi-prädiktiven Block im Direktmodus, das einen Langzeit-Referenzpuffer zum Speichern von Langzeit-Referenzbildern und einen Kurzzeit-Referenzpuffer zum Speichern von Kurzzeit-Referenzbildern umfasst, wobei das System für Folgendes ausgebildet ist:

   Erhalten einer Referenzindexinformation, die einem Referenzbild des bi-prädiktiven Blocks zugehörig ist;
   Erhalten eines Referenzbilds unter Verwendung der Referenzindexinformation;
   Bestimmen von Bewegungsvektoren des bi-prädiktiven Blocks; und
   Decodieren des bi-prädiktiven Blocks auf der Grundlage der bestimmten Bewegungsvektoren;

   **dadurch gekennzeichnet, dass**:

   beim Bestimmen von Bewegungsvektoren des bi-prädiktiven Blocks ein Vorwärtsbewegungsvektor des bi-prädiktiven Blocks gleich einem Bewegungsvektor des co-lokalisierten Blocks in einem Referenzbild eingestellt wird, wenn das Referenzbild ein Langzeit-Referenzbild ist, das im Langzeit-Referenzpuffer gespeichert ist,
   beim Bestimmen von Bewegungsvektoren des bi-prädiktiven Blocks ein Vorwärtsbewegungsvektor des bi-prädiktiven Blocks durch Skalieren eines Bewegungsvektors des co-lokalisierten Blocks in einem Referenzbild mit einer zeitlichen Distanz zwischen einem aktuellen Bild und dem Referenzbild definiert wird, wenn das Referenzbild ein Kurzzeit-Referenzbild ist, das im Kurzzeit-Referenzpuffer gespeichert ist,
   beim Bestimmen von Bewegungsvektoren des bi-prädiktiven Blocks ein Rückwärtsbewegungsvektor des bi-prädiktiven Blocks gleich Null eingestellt wird, wenn das Referenzbild ein Langzeit-Referenzbild ist, das im Langzeit-Referenzpuffer gespeichert ist; und
   beim Bestimmen von Bewegungsvektoren des bi-prädiktiven Blocks ein Rückwärtsbewegungsvektor des bi-prädiktiven Blocks durch Skalieren eines Bewegungsvektors des co-lokalisierten Blocks in einem Referenzbild mit einer zeitlichen Distanz zwischen einem aktuellen Bild und dem Referenzbild eingestellt wird, wenn das Referenzbild ein Kurzzeit-Referenzbild ist, das im Kurzzeit-Referenzpuffer gespeichert ist.

## Revendications

1. Système de codage vidéo pour dériver des vecteurs de mouvement pour un bloc bi-prédictif en mode direct comprenant une mémoire tampon de référence à long terme pour stocker des images de référence à long terme et une mémoire tampon de référence à court terme pour stocker des images de référence à court terme, le système étant adapté pour :

   obtenir une information d'index de référence associée à une image de référence du bloc bi-prédictif ;
   obtenir une image de référence en utilisant l'information d'index de référence ;
   déterminer des vecteurs de mouvement du bloc bi-prédictif ; et
   décoder le bloc bi-prédictif sur la base des vecteurs de mouvement déterminés ;
   **caractérisé en ce que**
   en déterminant des vecteurs de mouvement du bloc bi-prédictif un vecteur de mouvement vers l'avant du bloc bi-prédictif est réglé égal à un vecteur de mouvement du bloc co-localisé dans une image de référence, si l'image de référence est une image de référence à long terme stockée dans la mémoire tampon de référence à long terme,
   en déterminant des vecteurs de mouvement du bloc bi-prédictif un vecteur de mouvement vers l'avant du bloc bi-prédictif est défini en ajustant un vecteur de mouvement du bloc co-localisé dans une image de référence avec une distance temporelle entre une image actuelle et l'image de référence si l'image de référence est une image de référence à court terme stockée dans la mémoire tampon de référence à court terme,
   en déterminant des vecteurs de mouvement du bloc bi-prédictif un vecteur de mouvement vers l'arrière du bloc bi-prédictif est réglé égal à zéro si l'image de référence est une image de référence à long terme stockée dans la mémoire tampon de référence à long terme ; et
   en déterminant des vecteurs de mouvement du bloc bi-prédictif un vecteur de mouvement vers l'arrière du bloc bi-prédictif est réglé en ajustant un vecteur de mouvement du bloc co-localisé dans une image de référence avec une distance temporelle entre une image actuelle et l'image de référence si l'image de référence est une image de référence à court terme stockée dans la mémoire tampon de référence à court terme.

FIG. 1
(Related Art)

I
$B_1$
$B_2$
$P_3$
$B_4$
$B_5$
$P_6$
$B_7$
$B_8$
$P_9$
$B_{10}$
$B_{11}$
$P_{12}$

FIG. 2
(Related Art)

I
$P_3$
$B_1$
$B_2$
$P_6$
$B_4$
$B_5$
$P_9$
$B_7$
$B_8$
$P_{12}$
$B_{10}$
$B_{11}$

Start
Picture inputted
S111
P picture?
S114
Yes
No
B picture
S135
Direct mode
S138
Reading one block
S141
Co-located block stored in long-term reference buffer?
S142
Yes
No
Reading reference picture index and motion vector calculated at co-located block
S144
Scene cut picture?
S117
Yes
No
Coding with reference to long-term reference picture
S120
Partial scene change picture?
S123
Yes
No
Area in which a scene change occurs
S126
Area in which a scene change does not occur
S129
Coding using short-term reference picture
S132
A
B
C
D
E

FIG. 3A

FIG. 3B

A
B
C
D
E
Long-term reference buffer?
S147
Yes
No
Coding using modified Expressions 3 and 4
S150
Coding using conventional Expressions 1 and 2
S153
Next block?
S156
Yes
No
Next picture?
S159
Yes
No
End

Scene set A1
Scene set B1
Scene set A2
Scene set B2
Picture Type:I
$I_0$ $P_1$
$P_{50}$
[Scene Cut]
$P_{120}$
[Partial Scene Change]
$P_{160}$
[Scene Cut]
$P_{200}$
[Scene Cut]
$P_{250}$
[Partial Scene Change]

FIG. 4

FIG. 5
Scene set A1
Scene set B1
Scene set A2
Scene set B2
$I_0$ $P_1$
Picture Type:I
$P_{50}$
[Scene Cut]
$P_{120}$
[Partial Scene Change]
$P_{160}$
[Scene Cut]
$P_{200}$
[Scene Cut]
$P_{250}$
[Partial Scene Change]
Scene set B1
Scene set A2
Scene set B2
MV
$MV_f$
$MV_b$
$P_{50}$
P199 $B_1$ $B_2$ P200 $B_3$
$TR_d$
$TR_b$